# EUROPEAN PATENT APPLICATION

(11) **EP 4 700 862 A2**
(43) Date of publication of application: **25.02.2026**
(21) Application number: 25190088.2
(22) Date of filing: 17.07.2025
(51) Int. Cl.: H01M 4/36, H01M 4/38, H01M 4/525, H01M 4/587, H01M 10/0567, H01M 10/0569, H01M 4/02

(54) **ELECTROLYTE FOR LITHIUM-ION BATTERY AND LITHIUM-ION BATTERY**

(30) Priority: 23.08.2024 CN 202411172075
(71) Applicant: AESC Japan Ltd., Yokohama-Shi, Kanagawa 220-0012 (JP)
(72) Inventor: YU, Le, Pudong New Area Shanghai, 201315 (CN); SHI, Lei, Pudong New Area Shanghai, 201315 (CN)
(74) Representative: Becker, Eberhard

(57) **Abstract**

Disclosed are an electrolyte for a lithium-ion battery and a lithium-ion battery, and the present disclosure specifically relates to the field of electrolyte technology. The electrolyte includes: an organic solvent, lithium salt and an additive. The organic solvent includes cyclic carbonate. The content of the cyclic carbonate in the electrolyte is 20% to 30%. The cyclic carbonate includes fluoroethylene carbonate and ethylene carbonate. The content of the fluoroethylene carbonate in the electrolyte is greater than or equal to 6%. The content of the ethylene carbonate in the electrolyte is greater than or equal to 2%. The electrolyte of the present disclosure, while enhancing fast-charging capability, does not affect other performance of the battery, and may achieve a balance between high-nickel and high-silicon battery and fast-charging capability.

## Description

### BACKGROUND

### Technical Field

The present disclosure relates to the technical field of electrolyte, specifically relates to an electrolyte for a lithium-ion battery and a lithium-ion battery.

### Description of Related Art

Electric vehicles have rapidly captured the automotive market due to their advantages in low energy consumption and zero carbon emissions, gaining favor among a wide range of users. With increasing prevalence, the issue of limited driving range in electric vehicles has gradually been revealed, necessitating further enhancement of energy density in lithium-ion batteries to meet the growing demand for extended range capability.

In order to enhance battery energy density, positive electrode materials are evolving toward high-nickel ternary compositions, while negative electrode materials are progressing toward high-silicon content. The utilization of high-nickel and high-silicon materials has resulted in increased material reactivity and secondary reactions, thereby imposing more stringent requirements on electrolyte stability. Furthermore, with the advancement of fast-charging technology and heightened demands for battery fast-charging capabilities, conventional electrolyte formulations increasingly fail to reconcile the requirements of high-nickel and high-silicon systems with fast-charging performance. There is an urgent need to develop compatible electrolytes specifically designed for high-nickel and high-silicon systems that exhibit excellent fast-charging capabilities to meet market demands.

### SUMMARY

In view of the aforementioned deficiencies in existing technology, the present disclosure provides an electrolyte for lithium-ion batteries and a lithium-ion battery in order to address the challenge of electrolytes being unable to simultaneously accommodate high-nickel and high-silicon requirements, as well as fast-charging performance requirements.

To achieve the above purpose and other related purposes, the present disclosure provides an electrolyte for a lithium-ion battery. The electrolyte includes an organic solvent, lithium salt and an additive. The organic solvent includes cyclic carbonate. The content of the cyclic carbonate in the electrolyte is 20% to 30%. The cyclic carbonate includes fluoroethylene carbonate and ethylene carbonate. The content of the fluoroethylene carbonate in the electrolyte is greater than or equal to 6%. The content of the ethylene carbonate in the electrolyte is greater than or equal to 2%.

In an embodiment of the present disclosure, the content of the fluoroethylene carbonate in the electrolyte is 6% to 14%.

In an embodiment of the present disclosure, the content of the ethylene carbonate in the electrolyte is 2% to 10%.

In an embodiment of the present disclosure, the cyclic carbonate further includes propylene carbonate.

In an embodiment of the present disclosure, the lithium salt includes lithium hexafluorophosphate and lithium difluoro sulfonyl imide. The content of the lithium hexafluorophosphate in the electrolyte for lithium-ion battery is 13% to 17%. The content of the lithium difluoro sulfonyl imide in the electrolyte for lithium-ion battery is less than or equal to 2%.

In an embodiment of the present disclosure, the additive includes ethylene sulfate. The content of the ethylene sulfate in the electrolyte is 0.5% to 1%.

In an embodiment of the present disclosure, the organic solvent further includes one or more of ethyl methyl carbonate, dimethyl carbonate, and diethyl carbonate.

Another aspect of the present disclosure provides a lithium-ion battery. The lithium-ion battery includes a positive electrode, a negative electrode, a separator and an electrolyte. The electrolyte is the electrolyte described in any one of the above embodiments.

In an embodiment of the present disclosure, the positive electrode includes a positive electrode active material. The positive electrode active material includes a nickel cobalt manganese ternary material. The molar content of nickel in the nickel cobalt manganese ternary material is greater than or equal to 90%. And/or, the negative electrode includes a negative electrode active material. The negative electrode active material includes graphite and a silicon compound. The content of silicon compound in the negative electrode active material is greater than or equal to 3%.

In an embodiment of the present disclosure, the lithium-ion battery has a charging capability greater than or equal to 3C.

Based on the requirement for electrical conductivity of the electrolyte, as well as the purpose of lowering the desolvation barrier as much as possible, the present disclosure optimizes the content of cyclic carbonate in the electrolyte and the content of fluoroethylene carbonate and ethylene carbonate in the cyclic carbonate in the electrolyte to achieve a balance between high electrical conductivity and rapid desolvation capability, thus effectively enhancing fast-charging capability, and balancing the stability of high-nickel and high-silicon battery.

Fluoroethylene carbonate has a lower solvation capability due to the strong electron-withdrawing effect of the fluorine atom. Adding an appropriate amount of fluoroethylene carbonate to the electrolyte may improve the desolvation capability of lithium ions, avoiding lithium deposition during fast charging; while ethylene carbonate has a high dielectric constant, which may enhance the electrical conductivity of the electrolyte. Through optimizing the content of fluoroethylene carbonate and ethylene carbonate in the electrolyte, a balance between high electrical conductivity and rapid desolvation capability may be achieved, thereby enhancing the fast-charging capability of the battery.

### DESCRIPTION OF THE EMBODIMENTS

The implementation mode of the present disclosure is explained through the following specific examples. Those skilled in the art may easily understand other advantages and effects of the present disclosure from the content disclosed in this specification. The present disclosure may also be implemented or applied through other different specific implementation modes, and various modifications or changes may be made to the details in this specification based on different perspectives and applications, without departing from the spirit of the present disclosure. It should be noted that, in the absence of conflict, the features in the following examples and implementation examples may be combined with each other.

Unless otherwise defined, all technical and scientific terms used herein have the same meaning as commonly understood by those skilled in the art to which the present disclosure belongs. The terms used in the specification of the present disclosure are only for the purpose of describing specific implementation examples, not intended to limit the present disclosure. The term "and/or" used herein includes any and all combinations of one or more of the associated listed items.

Unless otherwise stated or where contradictions exist, the terms or phrases used herein possess the following meanings.

The terms "multiple," "various," "several times," and so on mentioned herein, unless specifically defined, refer to a quantity greater than or equal to 2. For example, "one or more" indicates one or greater than or equal to two.

In this context, "preferred," "better," "more preferable" are only for describing implementation modes or examples with better effects. It should be understood that they do not constitute limitations on the scope to be protected by the present disclosure. If "preferred" is used multiple times for a technical solution, unless otherwise specified, and there are no contradictions or mutually restrictive relationships, each "preferred" technical solution is independent of each other.

In this context, "further," "furthermore," "especially," and so on are used for descriptive purposes, indicating differences in content, but should not be understood as limitations on the scope to be protected by the present disclosure.

In this context, regarding numerical ranges, unless otherwise specified, the distribution of optional values within the numerical range is considered continuous, and includes the two numerical endpoints of the range (i.e., the minimum and maximum values), as well as every value between these two numerical endpoints. When multiple numerical ranges are provided to describe features or characteristics, these numerical ranges may be combined.

In this context, unless otherwise specified, "%" represents mass percentage content.

Currently, for battery systems with high-silicon content in the negative electrode, high content of fluoroethylene carbonate (FEC) is added to the electrolyte to stabilize the silicon negative electrode, while high-impedance film-forming additives are used to stabilize the positive electrode interface. However, with the development of fast-charging technology and higher requirements for fast-charging capability of battery, conventional electrolyte designs are increasingly unable to balance the high-nickel and high-silicon performance, as well as fast-charging performance.

For high-nickel positive electrode batteries, the electrolyte design commonly used in the industry generally takes the form of conventional solvents + appropriate additives. To meet fast-charging requirements, there is often a tendency to increase the proportion of low-viscosity linear carbonate solvents, such as adding more dimethyl carbonate (DMC), or even carboxylates. Since linear carbonates and carboxylates have lower dielectric constants, such design will lead to a decrease in the dielectric constant of the electrolyte, which is unfavorable for maintaining the electrical conductivity of the electrolyte. On the other hand, carboxylates have poor stability for the negative electrode, especially performing poorly in silicon-containing negative electrodes, and improvements in fast-charging performance are often accompanied by losses in other performance aspects.

The inventors found in their research that: fast-charging performance requires lithium ions to have high migration speed in the battery. From the perspective of the electrolyte, lithium ions experience entering the electrolyte from the positive electrode during charging, transferring to the negative electrode surface through electromigration in the electrolyte, and desolvating at the negative electrode surface to enter the negative electrode material. It can be seen that the main limitations of fast-charging capability lie in the electromigration speed and desolvation speed of lithium ions. The electromigration speed of lithium ions is subjected to the electrical conductivity of the electrolyte, and the desolvation speed is subjected to the solvation capability of the electrolyte for lithium ions. In the electrolyte, electrical conductivity is prone to be affected by the dielectric constant of the solvent. Generally, cyclic carbonates have high dielectric constants and may enhance the electrical conductivity of the electrolyte, but in terms of commonly used cyclic carbonates such as ethylene carbonate (EC), due to their high solvation capability, also make lithium-ion desolvation difficult. Due to the strong electron-withdrawing effect of fluorine atoms, fluorinated solvents have lower solvation capability, so using fluorinated solvents is favourable for fast-charging performance of battery.

Based on the understanding of mass transfer and charge transfer theory of electrolytes, the inventors provide an electrolyte for lithium-ion batteries and a lithium-ion battery, which achieves a balance between high electrical conductivity and rapid desolvation capability through optimizing solvent ratios, thus effectively enhancing the fast-charging capability of battery while balancing other performance requirements.

The first aspect of the present disclosure provides an electrolyte for a lithium-ion battery. The electrolyte includes an organic solvent, lithium salt and an additive. The organic solvent serves as the main part of the electrolyte, used for dissolving the lithium salt and the additive, and provides a medium for lithium-ion transport between the positive and negative electrodes of the battery.

In the present disclosure, the organic solvent includes cyclic carbonate. The cyclic carbonate has a relatively high dielectric constant, which may effectively promote lithium salt dissociation and enhance the electrical conductivity of the electrolyte. However, the viscosity of cyclic carbonate is relatively high, when the content of cyclic carbonate is excessive, the viscosity of the electrolyte increases, which might affect the fast-charging capability of the electrolyte. Therefore, the content of cyclic carbonate in the electrolyte should be appropriate. In this embodiment, the content of cyclic carbonate is 20% to 30%. Optionally, the content of cyclic carbonate may be 20%, 23%, 25%, 28% or 30%, etc.

The cyclic carbonate includes fluoroethylene carbonate (FEC) and ethylene carbonate (EC). Due to the strong electron-withdrawing effect of fluorine atoms, fluoroethylene carbonate possesses lower solvation capability, while ethylene carbonate has a higher dielectric constant, which may enhance the electrical conductivity of the electrolyte. Therefore, using both fluoroethylene carbonate and ethylene carbonate is favourable for the fast-charging performance of the battery. In the electrolyte of the present disclosure, the content of fluoroethylene carbonate is greater than or equal to 6%, further, the content of fluoroethylene carbonate is 6% to 14%. Optionally, the content of fluoroethylene carbonate is 6%, 8%, 10% or 14%, etc. In the electrolyte of the present disclosure, the content of ethylene carbonate is greater than or equal to 2%, further, the content of ethylene carbonate is 2% to 10%. Optionally, the content of ethylene carbonate is 2%, 5%, 8% or 10%, etc.

In an embodiment, the cyclic carbonate also includes propylene carbonate (PC), that is, the cyclic carbonate includes not only fluoroethylene carbonate and ethylene carbonate, but also propylene carbonate. The addition amount of propylene carbonate shall be adjusted in conjunction with fluoroethylene carbonate and ethylene carbonate to meet the total content of cyclic carbonates in the electrolyte, as well as the respective contents of fluoroethylene carbonate and ethylene carbonate in the electrolyte.

In an embodiment, the organic solvent further includes other types of solvents other than cyclic carbonate, for example, linear carbonate, carboxylate, etc. In this embodiment, the organic solvent further includes linear carbonate, which has low viscosity and low melting point. The combined use of cyclic carbonate and linear carbonate to form a mixed solvent can not only ensure that the electrolyte has higher electrical conductivity, but also renders the electrolyte a wider liquid range and lower viscosity. Linear carbonate includes one or more of ethyl methyl carbonate (EMC), dimethyl carbonate (DMC), diethyl carbonate (DEC). That is, linear carbonate may be chosen from any one of the materials listed above, for example, ethyl methyl carbonate, or dimethyl carbonate, or diethyl carbonate. Linear carbonate may also be chosen from any two or three of the materials listed above, for example, a combination of ethyl methyl carbonate and dimethyl carbonate, or a combination of ethyl methyl carbonate, dimethyl carbonate and diethyl carbonate. It should be explained that this embodiment does not impose special limit on the content of linear carbonate in the electrolyte. On the premises of satisfying the content of cyclic carbonate, lithium salt, additive and other substances, the remainder is linear carbonate. When the linear carbonate is a combination, there is no limit on the proportion between the ingredients within the combination, and they may be mixed in any proportion.

After the lithium salt is dissolved in the organic solvent, the lithium salt may release a large amount of active lithium ions, rendering the electrolyte better electrical conductivity. To obtain a better electrolyte, the lithium salt normally needs to have the following characteristics: low dissociation energy and higher solubility. Low dissociation energy ensures that the electrolyte formed after the lithium salt dissolves has higher electrical conductivity, thereby achieving high rate capability of the battery; higher solubility ensures that the electrolyte has sufficient lithium ions for transport. Better stability may be achieved. When the battery operates at a high-voltage and high-temperature condition, the lithium salt will not react with other ingredients. Good SEI film-forming performance may be realized to ensure that the electrolyte will not be continuously consumed during subsequent cycling. Good passivation function on aluminum current collector prevents corrosion of aluminum foil under high-voltage condition.

In an embodiment, the lithium salt includes lithium hexafluorophosphate (LiPF₆) and lithium difluoro sulfonyl imide (LiFSI). Lithium hexafluorophosphate with better overall performance serves as the main lithium salt, and lithium difluoro sulfonyl imide serves as the auxiliary lithium salt. Compared with lithium hexafluorophosphate, lithium difluoro sulfonyl imide has higher electrical conductivity and better thermal stability. Therefore, the addition of lithium difluoro sulfonyl imide may provide better ion transport performance, thereby enhancing the charging and discharging efficiency and stability of the battery, and enhancing the overall performance of the electrolyte. The concentration of the lithium salt may be set according to conventional choices in this field.

In this embodiment, the content of lithium hexafluorophosphate in the electrolyte is 13% to 17%, for example, the content of lithium hexafluorophosphate may be 13%, 15% or 17%, etc. When the content of lithium hexafluorophosphate in the electrolyte is less than 13%, the electrical conductivity, fast-charging capability and cycle performance of the electrolyte will all be affected. When the content is higher than 17%, due to the excessively high concentration of lithium salt, the viscosity of the electrolyte increases dramatically, and its electrical conductivity also decreases significantly, deteriorating the fast-charging capability. Furthermore, the content of lithium difluoro sulfonyl imide in the electrolyte is less than or equal to 2%. Optionally, the content of lithium difluoro sulfonyl imide in the electrolyte may be 2%, 1% or 0%. When the content of lithium difluoro sulfonyl imide in the electrolyte is 0%, it indicates that the lithium salt only adopts lithium hexafluorophosphate. Research has shown that when the content of lithium difluoro sulfonyl imide exceeds 2%, the corrosion problem of the current collector becomes prominent, thereby affecting the reliability of the battery cell. Therefore, in the present disclosure, the content of lithium difluoro sulfonyl imide does not exceed 2%.

The additive plays an auxiliary function in the electrolyte, and the type of additive may be chosen according to the actual requirements of the electrolyte, for example, film-forming additive, flame retardant additive, overcharge protection additive, etc.

In an embodiment, the additive includes ethylene sulfate (DTD). Ethylene sulfate undergoes reduction decomposition reactions on the electrode surface, participates in the film formation process, and forms a thin and uniform SEI film, which helps enhance the cycle stability and lifespan of the battery. Moreover, due to the high dielectric constant of ethylene carbonate in the cyclic carbonate that promotes the dissociation of Li⁺/PF₆⁻, ethylene sulfate may enter the first solvation layer and coordinate with Li⁺, weakening the Li⁺-solvent interaction and enhancing the reduction stability of the electrolyte. The inventors found in their research that the content of ethylene sulfate in the electrolyte has a significant impact on the cycle life of the battery. In this embodiment, the content of ethylene sulfate is not less than 0.5%. Furthermore, the content of ethylene sulfate is 0.5% to 1%. Optionally, the content of ethylene sulfate may be 0.5%, or 0.8%, or 1%, etc. When the content of ethylene sulfate is less than 0.5%, it is not possible to form a dense SEI film to effectively protect the electrode, which affects the cycle performance of the battery; whereas when the content of ethylene sulfate is too high, the stability of the electrolyte will also be affected.

In other embodiments, the additive may also be selected from 1,3-Propanesulton (PS), vinylene carbonate (VC) or vinyl ethylene carbonate (VEC), etc. The specific selection may be made according to the requirements of the electrolyte in actual production.

The electrolyte of the present disclosure may be prepared according to conventional preparation methods. As an example, in a glove box with an argon atmosphere containing water content <10 ppm, after mixing the organic solvent uniformly according to the set ratio by weight, the thoroughly dried lithium salt and additive are added to the above organic solvent, mixed uniformly, and prepared into an electrolyte for lithium-ion battery. The content of each ingredient in the electrolyte is the weight percentage calculated based on the total weight of the electrolyte.

The second aspect of the present disclosure provides a lithium-ion battery, which includes a positive electrode, a negative electrode, a separator and the electrolyte of the present disclosure as described above. The separator is disposed between the positive electrode and the negative electrode, serving the function of separation. During the charging and discharging process of the battery, lithium ions undergo repeated intercalation and deintercalation between the positive electrode and negative electrode, and the electrolyte serves the function of transporting ions between the positive electrode and negative electrode. The lithium-ion battery may be, for example, a primary battery or a secondary battery. The secondary battery may be, for example, a pouch battery, a prismatic battery or a columnar battery, etc. The present disclosure does not limit the type of lithium-ion battery.

Specifically, the positive electrode of the lithium-ion battery includes a positive electrode current collector and a positive electrode active substance layer disposed on at least one side surface of the positive electrode current collector. The positive electrode current collector may be, for example, foil formed after surface treatment of nickel, titanium, aluminum, silver, stainless steel or carbon, etc. Besides foil, the positive electrode current collector may also adopt any one or a combination of various forms such as film, mesh, porous, foam or non-woven fabric. The thickness of the positive electrode current collector may be, for example, 8µm to 15µm. In this embodiment, the positive electrode current collector may be, for example, aluminum foil, and the thickness of the aluminum foil may be, for example, 13µm. The positive electrode active substance layer includes positive electrode active material, positive electrode conductive agent and positive electrode binder. There are no specific limitations on the positive electrode active material, positive electrode conductive agent and positive electrode binder herein, and those skilled in the art may make selections according to actual requirements.

The positive electrode active material may be selected from any positive electrode active material used in lithium-ion batteries, that is, compounds that can reversibly intercalate and deintercalate lithium-ions may be adopted. In the present disclosure, the positive electrode active material is selected from nickel cobalt manganese ternary material, and the molar content of nickel in the nickel cobalt manganese ternary material accounts for more than 90% of the total molar amount of transition metal elements, such as LiNi_{0.9}Co_{0.05}Mn_{0.05}O₂, LiNi_{0.95}Co_{0.03}Mn_{0.02}O₂ or LiNi_{0.98}Co_{0.01}Mn_{0.01}O₂, etc. Using positive electrode active material with high nickel content may enhance the capacity of the battery, making the capacity of the lithium-ion battery not less than 50Ah. The positive electrode binder may be selected from, for example, any one or more of polyvinylidene fluoride (PVDF), poly(ethylene oxide) (PEO), polyamide (PA), polyacrylonitrile (PAN), polyacrylate, polyvinylether, polymethyl methacrylate (PMMA), ethylene-propylene-diene terpolymer (EPDM), polyhexafluoropropylene or polymerized styrene butadiene rubber (SBR), etc. The positive electrode conductive agent may be selected from, for example, one or at least two of conductive carbon black (Super P), acetylene black, graphene, carbon nanotubes, carbon nanofibers, etc.

The negative electrode of the lithium-ion battery includes a negative electrode current collector and a negative electrode active substance layer disposed on at least one side surface of the negative electrode current collector. The negative electrode current collector may be selected from, for example, one of copper foil current collector, composite copper foil current collector, carbon current collector, foam copper current collector or stainless steel current collector, and so on. The thickness of the negative electrode current collector may be, for example, 8µm to 15µm. In this embodiment, the negative electrode current collector is chosen to be copper foil, and the thickness of the copper foil may be, for example, 13µm. The negative electrode current collector has two surfaces opposite to each other in its own thickness direction, and the negative electrode active substance layer is disposed on any one or both of the two opposite surfaces of the negative electrode current collector. The negative electrode active substance layer includes a negative electrode active material, a negative electrode conductive agent, a negative electrode binder and a thickener, wherein there is no limitation on specific types of the negative electrode active material, the negative electrode conductive agent and the negative electrode binder, and materials known in the art that may be used in lithium-ion batteries may be adopted, and those skilled in the art may make selection according to actual requirements.

The negative electrode active material is selected from compounds capable of intercalating-deintercalating lithium ions. In this embodiment, the negative electrode active material includes graphite-based materials and silicon compounds. Graphite may be, for example, artificial graphite, natural graphite, etc., and silicon compounds may be, for example, silicon oxide SiOₓ(0<x<2), composites of silicon (Si) and carbon (C), etc., wherein, the content of silicon compounds in the negative electrode active material is not less than 3%. Further, the content of silicon compounds in the negative electrode active material is 3% to 5%. The negative electrode conductive agent is selected from one of carbon black, acetylene black, graphene, carbon nanotubes, carbon nanofibers, etc., or a combination of two or more mixed in any proportion. The negative electrode binder is selected from any one of polyacrylic acid (PAA), sodium polyacrylate (PAAS), polyacrylamide (PAM), polyvinyl alcohol (PVA), styrene-butadiene rubber (SBR), or a combination of several mixed in any proportion. The thickener is selected from sodium carboxymethyl cellulose (CMC-Na) or lithium carboxymethyl cellulose (CMC-Li).

The separator is selected from conventional separators in the art, for example, polyethylene (PE) film, polypropylene (PP) film, glass fiber film, polyethylene film or composite film, etc. The thickness of the separator is 9µm to 18µm, the air permeability thereof is 180s/100mL to 380s/100mL, and the porosity thereof is 30% to 50%.

The lithium-ion battery may be prepared according to conventional methods in the art, exemplified as follows.

### (1) Preparation of positive electrode

The above positive electrode active material, positive electrode conductive agent and positive electrode binder are dispersed in a solvent (for example N-methyl pyrrolidone, abbreviated as NMP) to form a uniform positive electrode slurry. The positive electrode slurry is coated on the positive electrode current collector, and after drying, cold pressing, and so on, the positive electrode sheet is obtained. The proportion of the ingredients in the positive electrode slurry may be set according to conventional proportions, which is not limited herein.

### (2) Preparation of negative electrode

The above negative electrode active material, negative electrode binder, thickener and negative electrode conductive agent are dispersed in deionized water to form a uniform negative electrode slurry. The negative electrode slurry is coated on the negative electrode current collector, and after drying, cold pressing and so on, the negative electrode sheet is obtained. The proportion of the ingredients in the negative electrode slurry may be set according to conventional proportions, which is not limited herein.

### (3) Assembly of battery

The prepared positive electrode sheet, separator, and negative electrode sheet are arranged in sequence, so that the separator is located between the positive electrode sheet and negative electrode sheet to function as separator, and then they are wound or stacked to obtain a bare cell. The bare cell is wrapped with aluminum-plastic film, transferred to a vacuum oven and dried at 120°C, sealed after injecting the above prepared electrolyte at 3.0g/Ah, and then the electrolyte is formed, thereby producing a pouch battery (lithium-ion battery) with a capacity of 1Ah.

The lithium-ion battery of the present disclosure adopts electrode materials with high-nickel and high-silicon content. Although the use of high-nickel and high-silicon materials enhances the energy density of the battery, it also leads to increased material activity and more side reactions, affecting the stability of the battery. Using the electrolyte of the present disclosure may enhance the stability of high-nickel and high-silicon batteries, and enhance the fast-charging performance of the battery, enabling the lithium-ion battery to have charging capability greater than or equal to 3C. Moreover, the operating voltage of this lithium-ion battery may reach 4.15V and above, which may be adapted to high-voltage environments.

The lithium-ion battery of the present disclosure may be used in electronic devices in the form of single cells, battery modules or battery packs to provide power. Electronic devices include but are not limited to mobile phones, tablets, laptops, electric toys, electric bicycles, new energy vehicles, ships, spacecraft, etc. Electric toys may include stationary or mobile electric toys, for example, game consoles, electric car toys, electric ship toys and electric airplane toys, etc. Spacecraft may include airplanes, rockets, space shuttles and spaceships, etc. New energy vehicles may be pure electric vehicles, hybrid vehicles or range-extended vehicles, etc.

The technical solution of the present disclosure is explained in detail through several specific examples and comparative examples below. Unless otherwise stated, the raw materials and reagents used in the following examples are all commercially available products, or can be prepared through conventional methods in the field, and the instruments used in the examples can all be commercially purchased.

### Example 1

This example provides an electrolyte for a lithium-ion battery. The ingredients and content of the electrolyte are shown in Table 1. In Table 1, the content of each ingredient of the electrolyte is the weight percentage calculated based on the total weight of the electrolyte.

Preparation of electrolyte: In an argon atmosphere glove box with water content <10 ppm, battery-grade ethylene carbonate (EC), propylene carbonate (PC), fluoroethylene carbonate (FEC), ethyl methyl carbonate (EMC), and dimethyl carbonate (DMC) are mixed in proportion to form an organic solvent; then lithium salt, namely lithium hexafluorophosphate (LiPF₆) and lithium difluoro sulfonyl imide (LiFSI), as well as additive, namely ethylene sulfate (DTD) are added to the organic solvent and mixed thoroughly to obtain the electrolyte. The proportion of each ingredient in the finally prepared electrolyte is shown in Table 1. It should be noted that the content of ethylene carbonate (EC), propylene carbonate (PC), and fluoroethylene carbonate (FEC) in the electrolyte is as shown in Table 1, while the unshown ethyl methyl carbonate (EMC) and dimethyl carbonate (DMC) always supplement the remaining part in a ratio of 2:1 to ensure that the total amount of electrolyte prepared each time is the same.

This example further provides a lithium-ion battery, which includes a positive electrode, a separator, a negative electrode, and the electrolyte of this example. The preparation process of the lithium-ion battery is as follows.

Preparation of positive electrode: LiNi_{0.9}Co_{0.05}Mn_{0.05}O₂, polyvinylidene fluoride, and conductive carbon black (Super P) are mixed in a mass ratio of 98:1:1. N-methyl pyrrolidone (NMP) is added and stirred under the function of a vacuum mixer until the system becomes homogeneous and transparent to obtain the positive electrode slurry. The positive electrode slurry is evenly coated on aluminum foil, dried at room temperature, then transferred to an oven for drying, and subjected to cold pressing, cutting and other processes to obtain the positive electrode sheet.

Preparation of negative electrode: Negative electrode active material (97% artificial graphite + 3% silicon oxide SiOₓ(0<x<2)), conductive carbon black (Super P), sodium carboxymethyl cellulose (CMC-Na), and styrene-butadiene rubber (SBR) are mixed in a mass ratio of 96:1:1:2, then deionized water is added, and thoroughly and evenly stirred and mixed under the function of a vacuum mixer to obtain the negative electrode slurry. The negative electrode slurry is evenly coated on copper foil, dried at room temperature, then transferred to an oven for drying, and then subjected to cold pressing, cutting and other processes to obtain the negative electrode sheet.

Selection of separator: A 12µm polypropylene film (PP) is used as the separator.

Assembly of battery: The positive electrode sheet, separator, and negative electrode sheet are stacked in sequence, so that the separator is between the positive electrode sheet and the negative electrode sheet to serve as separator, and they are stacked to obtain a bare cell. Then the bare cell is wrapped with aluminum-plastic film, transferred to a vacuum oven and dried at 120°C, injected with the above-prepared electrolyte at 3.0g/Ah and sealed, and the electrolyte is formed to obtain a pouch lithium-ion battery with a capacity of 1Ah.

The present disclosure further provides Examples 2-9 and Comparative Examples 1-8, wherein the content of each ingredient in the electrolyte of Examples 2-9 and Comparative Examples 1-8 is shown in Table 1, and other steps are the same as Example 1.

**Table 1: Formulations of electrolyte in Examples 1 to 9 and Comparative Examples 1 to 8**

| Group | Content of solvent (%) | | | Content of lithium salt (%) | | Content of additive (%) |
|---|---|---|---|---|---|---|
| | EC | PC | FEC | LiPF₆ | LiFSI | DTD |
| Example 1 | 10 | 6 | 9 | 14 | 1 | 1 |
| Example 2 | 10 | 6 | 14 | 14 | 1 | 1 |
| Example 3 | 10 | 6 | 6 | 14 | 1 | 1 |
| Example 4 | 5 | 6 | 9 | 14 | 1 | 1 |
| Example 5 | 2 | 9 | 9 | 14 | 1 | 1 |
| Example 6 | 10 | 6 | 9 | 13 | 1 | 1 |
| Example 7 | 10 | 6 | 9 | 14 | 2 | 1 |
| Example 8 | 10 | 6 | 9 | 17 | 1 | 1 |
| Example 9 | 10 | 6 | 9 | 13 | 1 | 0.5 |
| Comparative Example 1 | 20 | 6 | 9 | 14 | 1 | 1 |
| Comparative Example 2 | 3 | 6 | 6 | 14 | 1 | 1 |
| Comparative Example 3 | 10 | 6 | 5 | 14 | 1 | 1 |
| Comparative Example 4 | 1 | 9 | 10 | 14 | 1 | 1 |
| Comparative Example 5 | 10 | 6 | 9 | 12 | 1 | 1 |
| Comparative Example 6 | 10 | 6 | 9 | 14 | 3 | 1 |
| Comparative Example 7 | 10 | 6 | 9 | 14 | 1 | 0.3 |
| Comparative Example 8 | 10 | 6 | 9 | 18 | 1 | 1 |

The lithium-ion batteries of Examples 1-9 and Comparative Examples 1-8 were tested for performance, and the test results are shown in Table 2. The test methods are as follows.

### (1) Electrical conductivity test on electrolyte

An electrical conductivity meter is used to test the electrical conductivity of the electrolyte, with the environmental temperature controlled at 25°C to test the electrical conductivity of each electrolyte sample.

### (2) Cycle test on secondary battery

In an oven at a specified temperature (high temperature 45°C), cycle charging and discharging is conducted at a current of 1C within a specified potential range (2.5V-4.25V), and the discharge capacity of each cycle is recorded. The test is ended when the battery capacity reaches 90% of the first cycle capacity.

### (3) Fast-charging capability test on secondary battery

A three-electrode battery is used to measure the fast-charging capability of the battery. In an oven at a specified temperature (high temperature 45°C), charging is conducted at a current of 3C within a specified potential range (2.5-4.25V), and the cell capacity is recorded when the negative electrode potential reaches -20mV, which is then converted to SOC (State of Charge, the ratio of the remaining capacity of the battery to its capacity in a fully charged state).

**Table 2: Performance test results of lithium-ion batteries in Examples 1-9 and Comparative Examples 1-8**

| Group | Electrical conductivity (mS/cm) | SOC corresponding to -20mV | Number of cycle @90%SOH at 45°C |
|---|---|---|---|
| Example 1 | 10.6 | 85% | 477 |
| Example 2 | 11.4 | 87% | 484 |
| Example 3 | 10.3 | 82% | 468 |
| Example 4 | 9.4 | 80% | 475 |
| Example 5 | 9.2 | 81% | 489 |
| Example 6 | 10.4 | 80% | 467 |
| Example 7 | 10.9 | 83% | 482 |
| Example 8 | 9.2 | 80% | 481 |
| Example 9 | 10.4 | 80% | 458 |
| Comparative Example 1 | 11.7 | 73% | 448 |
| Comparative Example 2 | 7.6 | 71% | 450 |
| Comparative Example 3 | 10.1 | 74% | 411 |
| Comparative Example 4 | 9.1 | 81% | 428 |
| Comparative Example 5 | 10.0 | 74% | 464 |
| Comparative Example 6 | 10.8 | 75% | 477 |
| Comparative Example 7 | 10.6 | 82% | 447 |
| Comparative Example 8 | 8.9 | 74% | 480 |

Referring to Table 1 and Table 2, by comparing Examples 1-5 and Comparative Examples 1 and 2, it can be concluded that: the total content of cyclic carbonate in the electrolyte has a significant impact on the electrical conductivity of the electrolyte and the fast-charging performance of the battery. Under conditions where other ingredients of the electrolyte remain unchanged, the higher the content of cyclic carbonate in the electrolyte, the higher the electrical conductivity of the electrolyte, and the higher the fast-charging capability of the battery. When the content of cyclic carbonate in the electrolyte exceeds 30%, although the electrical conductivity of the electrolyte continues to increase, the fast-charging capability deteriorates. This is because cyclic carbonate has a relatively high viscosity, and when the proportion of cyclic carbonate is too high, it may lead to an increase in the viscosity of the electrolyte, which affects the fast-charging capability of the battery. When the content of cyclic carbonate in the electrolyte is lower than 20%, the electrical conductivity of the electrolyte significantly is decreased, and the fast-charging capability of the corresponding battery is deteriorated. Therefore, it is reasonable to limit the content of cyclic carbonate in the electrolyte to the range of 20%-30%.

By comparing Examples 1, 2 and 3 with Comparative Example 3, it can be concluded that under conditions where other ingredients of the electrolyte remain unchanged, the higher the content of FEC in the electrolyte, the higher the electrical conductivity of the electrolyte, and the higher the SOC when the corresponding negative electrode potential reaches -20mV (indicating higher fast-charging capability). This is because FEC has lower solvation capability, and FEC may improve the desolvation capability of lithium ions, thereby enhancing the fast-charging capability of the battery. When the content of FEC is less than 6%, due to insufficient FEC content, the improvement in desolvation capability of lithium ions is not obvious. When the FEC content is too high, it might lead to excessive cyclic carbonate content in the electrolyte, affecting the viscosity of the electrolyte, which in turn affects the fast-charging capability of the battery. Therefore, in the electrolyte of the present disclosure, the content of FEC is greater than or equal to 6% and less than or equal to 14%, which may ensure rapid desolvation of lithium ions during charging and avoid lithium deposition during fast-charging.

By comparing Examples 1, 4 and 5 with Comparative Example 4, it can be seen that: when the EC content in the electrolyte is less than 2%, the high-temperature cycle performance of the battery significantly decreases. This indicates that the film-forming function of EC plays an irreplaceable role in maintaining battery cycling. When the EC content is less than 2%, an effective protective film cannot be formed. When the EC content is too high, it might cause difficulty in lithium-ion desolvation. Therefore, the content of EC in the electrolyte is greater than or equal to 2% and less than or equal to 10%.

By comparing Examples 1, 6 and 8 with Comparative Examples 5, 6 and 8, it can be seen that the content of LiPF₆ in the electrolyte shall not be too low, nor too high. When the content of LiPF₆ is less than 13%, the electrical conductivity, fast-charging capability, and cycle performance of the electrolyte will all be affected. When the content of LiPF₆ exceeds 17%, due to the high concentration, the viscosity of the electrolyte increases dramatically, and its electrical conductivity is also significantly decreased, and the fast-charging capability is deteriorated.

Adding a small amount of LiFSI together with LiPF₆ as lithium salt in the electrolyte may enhance the fast-charging performance of the battery. However, when the content of LiFSI in the electrolyte is too high (higher than 2%), although the performance may be improved, the corrosion problem of the current collector becomes prominent, which affects the reliability of the battery cell.

By comparing Examples 1 and 9 with Comparative Example 7, it can be seen that: the content of DTD in the electrolyte has a significant impact on the cycle performance of the battery. When the DTD content is less than 0.5%, an effective protective film cannot be formed, which affects the cycle performance of the battery.

In summary, through optimizing the content of cyclic carbonate in the electrolyte and the content of fluoroethylene carbonate and ethylene carbonate in the cyclic carbonate in the electrolyte, the present disclosure enhances the fast-charging capability of the battery while not affecting other performance of the battery, thereby achieving a balance between high-nickel and high-silicon battery and fast-charging performance. Fluoroethylene carbonate may improve lithium-ion desolvation capability. Ethylene carbonate has a high dielectric constant, which may enhance the electrical conductivity of the electrolyte. By optimizing the content of fluoroethylene carbonate and ethylene carbonate in the electrolyte, a balance between high electrical conductivity and rapid desolvation capability may be achieved, thereby enhancing the fast-charging capability of the battery. By optimizing the content of lithium hexafluorophosphate and lithium difluoro sulfonyl imide in the electrolyte and the content of the ethylene sulfate serving as additive, the cycle performance of the battery may be improved while enhancing the fast-charging capability of the battery. Therefore, the present disclosure effectively overcomes some practical problems in the existing technology, thus having high utilization value and practical significance.

## Claims

1. An electrolyte for a lithium-ion battery, comprising:
an organic solvent, lithium salt and an additive;
wherein the organic solvent comprises cyclic carbonate, a content of the cyclic carbonate in the electrolyte is 20% to 30%;
the cyclic carbonate comprises fluoroethylene carbonate and ethylene carbonate, a content of the fluoroethylene carbonate in the electrolyte is greater than or equal to 6%, a content of the ethylene carbonate in the electrolyte is greater than or equal to 2%.

2. The electrolyte according to claim 1, wherein the content of the fluoroethylene carbonate in the electrolyte is 6% to 14%.

3. The electrolyte according to claim 1, wherein the content of the ethylene carbonate in the electrolyte is 2% to 10%.

4. The electrolyte according to any one of claims 1-3, wherein the cyclic carbonate further comprises propylene carbonate.

5. The electrolyte according to claim 1, wherein the lithium salt comprises lithium hexafluorophosphate and lithium difluoro sulfonyl imide,
a content of the lithium hexafluorophosphate in the electrolyte is 13% to 17%,
a content of the lithium difluoro sulfonyl imide in the electrolyte is less than or equal to 2%.

6. The electrolyte according to claim 1, wherein the additive comprises ethylene sulfate, a content of the ethylene sulfate in the electrolyte is 0.5% to 1%.

7. The electrolyte according to claim 1, wherein the organic solvent further comprises one or more of ethyl methyl carbonate, dimethyl carbonate, and diethyl carbonate.

8. A lithium-ion battery, comprising a positive electrode, a negative electrode, a separator and an electrolyte, wherein the electrolyte is the electrolyte according to any one of claims 1-7.

9. The lithium-ion battery according to claim 8, wherein the positive electrode comprises a positive electrode active material, the positive electrode active material comprises a nickel cobalt manganese ternary material, a molar content of nickel in the nickel cobalt manganese ternary material is greater than or equal to 90%; and/or,
the negative electrode comprises a negative electrode active material, the negative electrode active material comprises graphite and a silicon compound, a content of the silicon compound in the negative electrode active material is greater than or equal to 3%.

10. The lithium-ion battery according to claim 8, wherein the lithium-ion battery has a charging capability greater than or equal to 3C.
